# EUROPÄISCHE PATENTSCHRIFT

(11) **EP 2 257 456 B1**
(45) Veröffentlichungstag und Bekanntmachung des Hinweises auf die Patenterteilung: **18.12.2013**
(21) Anmeldenummer: 10706532.8
(22) Anmeldetag: 24.02.2010
(51) Int. Cl.: B61C 9/20, F16H 47/08, F16H 57/02

(54) **GETRIEBE MIT EINEM GETRIEBEGEHÄUSE**
TRANSMISSION COMPRISING A TRANSMISSION HOUSING
TRANSMISSION MUNIE D'UN CARTER DE TRANSMISSION

(30) Priorität: 28.02.2009 DE 102009011041
(43) Veröffentlichungstag der Anmeldung: 08.12.2010
(73) Patentinhaber: Voith Patent GmbH, 89522 Heidenheim (DE)
(72) Erfinder: BUSCH, Jörg, 89551 Königsbronn-Zang (DE)
(74) Vertreter: Dr. Weitzel & Partner
(86) Internationale Anmeldenummer: PCT/EP2010/001142
(87) Internationale Veröffentlichungsnummer: WO 2010/097210

(56) Entgegenhaltungen:
- WO-A1-86/02983
- DE-A1- 2 021 543
- DE-B- 1 133 419
- DE-B1- 1 700 160
- DE-B3-102008 011 386

## Beschreibung

Die Erfindung betrifft ein Getriebe mit einem Getriebegehäuse und mit wenigstens einem hydrodynamischen Bauteil, von welchem wenigstens ein Bereich einstückig mit dem Getriebegehäuse ausgebildet ist. Außerdem betrifft die Erfindung ein Verfahren zum Herstellen eines Getriebegehäuses für ein derartiges Getriebe.

Gattungsgemäße Automatgetriebe sind allgemein bekannt. Beispielhaft soll hier auf die DE 20 21 543 A1 verwiesen werden, welche ein kombiniert hydrodynamisch-mechanisches Getriebe für Fahrzeuge mit Teilung der Traktionsleistung mittels eines Differentialgetriebes auf einen Leistungsweg mit einem hydrodynamischen Wandler und einen parallel dazu liegenden mechanischen Leistungsweg und mit einer Zusammenführung der Traktionsleistung auf einen gemeinsamen Leistungsweg beschreibt. Dabei weist das Getriebe mechanische, wahlweise ein- und ausschaltbare Übersetzungsstufen (Gängen) im hydrodynamischen und/oder mechanischen und/oder im gemeinsamen Leistungsweg auf. Die DE 1 133 419 B1 zeigt auch alle Merkmale des kennzeichnenden Teils der Ansprüchen 1 und 11.

Diese sogenannten Differentialwandlergetriebe werden im Antrieb von Fahrzeugen verschiedener Art angewandt. Dabei werden in einem solchen Getriebe, wie üblicherweise in allen Automatgetrieben, mehrere Planetensätze verwendet. Diese Planetensätze werden in einem vorbestimmten festen Koppelschema miteinander verbunden. Mit Lamellenkupplungen bzw. Lamellenbremsen werden dann die verschiedenen Übersetzungen des Getriebes realisiert. Mit den Lamellen der Kupplungen bzw. Bremsen wird typischerweise erreicht, dass es zu Schaltungen ohne Zugkraftunterbrechung kommt.

Bei vielen derartigen Getrieben mit Leistungsteilung sind der hydrodynamische Wandler und/oder andersartige hydrodynamische Bauteile wie beispielsweise hydrodynamische Kupplungen oder verschleißfreie Dauerbremsen in Form eines Retarders in das Getriebe und damit auch in das Getriebegehäuse integriert.

Insbesondere kann dabei die äußere Schale des hydrodynamischen Bauteils ganz oder teilweise in das Getriebegehäuse integriert sein.

Ferner ist aus der älteren DE 10 2008 011 386 ein Turbogetriebe bekannt, bei dem nicht nur die äußere Schale eines hydrodynamischen Bauteils, sondern auch ein beschaufelter Stator als Funktionselement eines hydrodynamischen Bauteils einteilig mit dem Getriebegehäuse ausgebildet wird. Das Getriebegehäuse selbst ist dabei entlang einer durch die Achse der hydrodynamischen Bauteile verlaufenden Ebene teilbar ausgeführt, um die Montage der hydrodynamischen Bauteile zu ermöglichen.

Diese Getriebeformen, bei denen Teile der hydrodynamischen Bauteile in das Getriebegehäuse integriert ausgeführt werden, weisen dabei immer den Nachteil auf, dass sie hinsichtlich ihrer Herstellung ausgesprochen komplex ausgebildet sind. Die übliche Herstellung derartiger Bauteile besteht daher in einem Gussverfahren mit verlorenen Formen, beispielsweise einem Sandguss, welcher die komplexen und zahlreiche Hinterschneidungen aufweisenden Konturen des Getriebegehäuses abbilden kann, um diese in Gusstechnik zu realisieren.

Dieses Herstellungsverfahren hat dabei jedoch zwei entscheidende Nachteile. Das Verfahren mit verlorenen Formen ist vergleichsweise teuer. Außerdem erlaubt der Sandguss lediglich eine vergleichsweise geringe Oberflächenqualität, da durch die Körnung des Sandes immer eine gewisse Oberflächenrauheit zurückbleibt, welche je nach Anwendungsfall eine entsprechende Nachbearbeitung der Oberflächen erforderlich macht.

Es ist nun die Aufgabe der vorliegenden Erfindung, ein Getriebe mit einem Getriebegehäuse dahingehend zu verbessern, dass eine möglichst einfache und effiziente Herstellung des Getriebegehäuses zusammen mit einer einfachen und effizienten Montage desselben möglich wird.

Erfindungsgemäß wird diese Aufgabe durch die im kennzeichnenden Teil von Patentanspruch 1 genannten Merkmale gelöst.

Erfindungsgemäß ist das Getriebegehäuse dabei im Wesentlichen rohrförmig mit Öffnungen an den beiden Enden ausgebildet, also nicht in einer die Achse des hydrodynamischen Bauteils schneidenden Ebene geteilt. Ferner ist der einstückig mit dem Getriebegehäuse ausgebildete Bereich des hydrodynamischen Bauteils hier als Funktionselement des hydrodynamischen Bauteils und nicht lediglich als Schale ausgebildet. Dieses Funktionselement des hydrodynamischen Bauteils ist dabei in dem Getriebegehäuse zwischen den beiden Öffnungen angeordnet. Der innere Querschnitt des Getriebegehäuses ist von dem Funktionselement ausgehend zu der jeweiligen Öffnung hin gleichbleibend oder sich erweiternd ausgebildet. Das Getriebegehäuse kann durch diesen sich von dem Funktionselement zu den jeweiligen Öffnungen gleich bleibenden oder erweiternden Querschnitt, welcher also frei von Hinterschneidungen ist, bei der Herstellung durch ein Gießverfahren sehr leicht entformt werden. Insbesondere kann auf verlorene Kerne verzichtet werden, welche notwendig wären, um Hinterschneidungen, welche hier erfindungsgemäß nicht auftreten, darzustellen. Das Getriebegehäuse des erfindungsgemäßen Getriebes kann somit sehr einfach und kostengünstig in Dauerformen, beispielsweise Kokillen, oder, sofern es die benötigten Stückzahlen wirtschaftlich rentabel machen, Druckgussformen hergestellt werden. Das Getriebegehäuse selbst wird dabei als einstückiges im Wesentlichen rohrförmiges Teil ausgebildet. Dieses eine Teil kann dann seine beiden Enden durch entsprechende Deckel oder dergleichen verschlossen werden. Das erfindungsgemäße Getriebegehäuse als Gussteil umfasst dabei den größten Teil der Länge des gesamten Getriebeaufbaus, währen die Decke nur einen kleinen Teil der Länge einnehmen. Typischerweise mehr als 97 %,mindestens jedoch 90 % bis 95 % der von dem Getriebegehäuse umschlossenen Länge liegt dabei innerhalb des gegossenen einstückigen Getriebegehäuses, welches auch die Funktionselemente des hydrodynamischen Bauteils umfasst. Die Deckel sind dann im Wesentlichen flächig und nicht mehr rohrförmig ausgebildet und umfassen typischerweise nur einen minimalen Teil der vom Getriebegehäuse umschlossenen Länge typischerweise weniger als 3 %, maximal 5 bis 10% der ums hlossenen Gesamtlänge.

Unter dem Funktionselement ist dabei im Sinne der Erfindung ein Element zu verstehen, das die Strömung in dem hydrodynamischen Bauteil beeinflusst. Durch die Integration des wenigstens einen Funktionselements ist auch dieses in dem einen Herstellungsschritt mit herstellbar, so dass auf zusätzliche Formen für ein derartiges Funktionselement, insbesondere ein Leitrad eines hydrodynamischen Wandlers, und hier bevorzugt das Leitrad zusammen mit den feststehenden Leitschaufeln, verzichtet werden kann. Es wird somit bei der Herstellung des Getriebegehäuses unmittelbar mit hergestellt.

Durch den Guss in einer Dauerform, insbesondere einer Kokille oder einer Druckgussform, wird außerdem eine, im Vergleich zu verlorenen Formen mit Sandkernen, sehr gute Oberflächenqualität erreicht. Außerdem wird aufgrund der hohen Wärmeleitfähigkeit der Kokille oder der Druckgussform eine schnelle Abkühlung und damit ein schnelles Erstarren der Schmelze erreicht, so dass neben der qualitativ guten Oberfläche auch ein sehr feinkörniges Gefüge mit hoher Festigkeit entsteht.

Der Aufbau erlaubt es in der vorteilhaften Ausgestaltung somit, ein Funktionselement eines hydrodynamischen Bauteils, bevorzugt ein Leitrad eines hydrodynamischen Wandlers und besonders bevorzugt ein einstückg mit Leitschaufeln versehenes Leitrad mit ausreichend hoher Oberflächenqualität herzustellen, so dass keine Nachbearbeitung der typischerweise sehr komplexen Formen des Leitrads beziehungsweise der Leitradschaufeln notwendig ist.

Außerdem kann in dieser besonders bevorzugten Ausführungsform des Getriebes, in welcher das Leitrad einstückig mit den Leitradschaufeln und als Funktionselement einstückig mit dem Getriebegehäuse ausgebildet ist, ein weiterer Vorteil erzielt werden. Dadurch, dass die Leitschaufeln nicht nachbearbeitet werden müssen, kann eine sehr freie Gestaltung der Leitschaufeln erfolgen, da diese nicht durch z rspanende Bearbeitungen an allen Stellen zugänglich sein müssen. Die Leitschaufeln können damit ideal an die hydraulischen Bedingungen angepasst werden, da die einzige konstruktive Vorgabe in der Entformbarkeit aus der Dauerform liegt, und da keine Einschränkungen in der Gestaltung aufgrund der Nachbearbeitung vorliegen.

In einer weiteren sehr günstigen Ausgestaltung der Erfindung sind ferner in dem einstückig mit dem Getriebegehäuse ausgebildeten Bereich des hydrodynamischen Bauteils weitere Elemente, wie Leitungsbereiche und hier bevorzugt Steuerleitungen für Hydrauliköl mit integriert.

Damit kann sich die Leitungsführung für das benötigte Steuermedium im Wesentlichen auf das Getriebegehäuse und die einstückig mit diesem ausgebildeten Bauteile konzentrieren. Dies verringert die Anzahl an Verbindungen und an Übergabestellen zwischen dem Getriebegehäuse und dem Funktionselement, beispielsweise dem Leitrad. Auch dadurch können weitere Bauteile vermieden werden, und es werden außerdem entsprechende Arbeitsschritte bei der Montage eingespart. Zuletzt ist die einstückige Ausgestaltung mit integrierten Leitungen auch hinsichtlich der Dichtheit weitaus weniger anfällig, da weniger Übergabestellen und damit weniger Dichtungsstellen benötigt werden.

In einer besonders günstigen Weiterbildung der Erfindung kann es Außerdem vorgesehen sein, dass der einstückig mit dem Getriebegehäuse ausgebildete Bereich des hydrodynamischen Bauteils neben den Funktionselementen hydraulische Aktuatoren, insbesondere integrierte Kolben, aufweist. Diese integrierten Kolben, welche typischerweise in dem den Funktionselementen abgewandten Teil des einstückig mit dem Getriebegehäuse ausgebildeten Bereichs angeordnet sein werden, können beispielsweise zur Steuerung von Lamellen- und/oder Klauenkupplungen in dem an sie angrenzenden Bereich des Getriebegehäuses genutzt werden. Auch hier liegen die Vorteile wieder in der verringerten Anzahl an Bauteile , ebenso wie in der verringerten Anzahl an Übergabestellen und Dichtstellen sowie an der vereinfachten Montage, da derartige Aktuatoren nicht separat montiert und in dem Getriebe befestigt werden müssen.

Wie schon erwähnt, bietet sich für die erfindungsgemäße Ausgestaltung des Getriebes beziehungsweise seines Getriebegehäuses eine Herstellung über Gießverfahren an. Dementsprechend ist das bevorzugte Verfahren zur Herstellung eines Getriebegehäuses für ein erfindungsgemäßes Getriebe das Gießen in einer Dauerform ohne verlorene Kerne. Dies ermöglicht ab einer bestimmten Grenzstückzahl, je nachdem ob als Dauerform eine wenigstens zweiteilige Kokille oder eine Druckgussform eingesetzt wird, eine deutlich günstigere Herstellung als mit entsprechenden Gießverfahren mit verlorenen Formen, insbesondere einem Sandguss. Außerdem lassen sich bessere Oberflächenqualitäten und bessere Materialfestigkeiten realisieren, so dass weitere Einsparungen und insbesondere bei der Nachbearbeitung der gegossenen Bauteile möglich sind..

Weitere vorteilhafte Ausgestaltungen der Erfindung ergeben sich aus den restlichen Unteransprüchen und aus den Ausführungsbeispielen, welche nachfolgend anhand der Figuren exemplarisch erläutert werden.

Dabei zeigen:
- Figur 1: eine mögliche Ausführungsform eines Getriebes mit Leistungstellung durch einen hydrodynamischen Wandler gemäß dem Stand der Technik;
- Figur 2: eine erste mögliche Ausführungsform eines Getriebegehäuses für das erfindungsgemäße Getriebe; und
- Figur 3: eine zweite mögliche Ausführungsform eines Getriebegehäuses für das erfindungsger äße Getriebe.

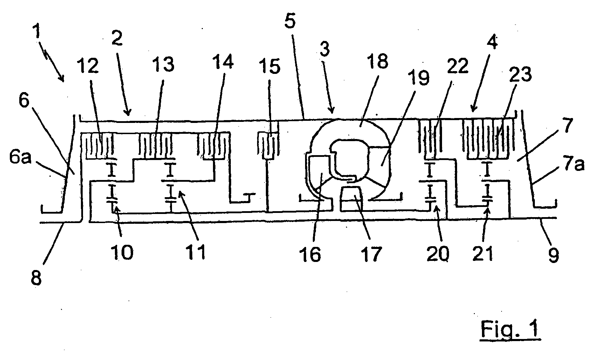

In Figur 1 ist ein typisches hydrodynamisch-mechanisches Automatgetriebe 1 dargestellt. Das Getriebe ist dabei im Wesentlichen symmetrisch aufgebaut, weshalb hier lediglich eine Hälfte des Getriebes zu erkennen ist. Das Getriebe 1 umfasst dabei einen Eingangsbereich 2, den hydrodynamischen Wandler 3 sowie einen Ausgangsbereich 4, welche allesamt in einem Gehäuse 5 angeordnet sind. Dieses ist im Wesentlichen rohrförmig ausgebildet. Die beiden Öffnungen 6, 7 des im Wesentlichen rohrförmigen Getriebegehäuses 5 sind dabei über entsprechende "Deckel" 6a, 7a verschlossen oder so an korrespondierenden Bauteile angeflanscht, dass diese die Öffnungen entsprechend "verdeckeln". Der Eingangsbereich befindet sich dabei auf der dem Getriebeeingang 8 zugewandten Seite des hydrodynamischen Wandlers 3, der Ausgangsbereich 4 befindet sich dementsprechend auf der dem Getriebeausgang 9 zugewandten Seite des hydrodynamischen Wandlers 3. Der Aufbau des Eingangsbereichs 2 ist hier ein gemäß dem Stand der Technik üblicher Aufbau, welcher zwei Planetensätze 10, 11 sowie entsprechende Lamellenkupplungen 12, 13, 14 umfasst, über welche verschiedene Übersetzungen eingestellt werden können. Wie bei hydrodynamisch-mechanischen Getrieben 1 üblich, kann außerdem Leistung über den hydrodynamischen Wandler 3 übertragen werden, was typischerweise beim Anfahren im ersten Gang erfolgen wird. Der hydrodynamische Wandler ist dabei über eine Lamellenbremse 15 im Eingangsbereich 2 derart ansteuerbar, dass ein Pumpenrad 16 des hydrodynamischen Wandlers 3 über diese Lamellenbremse 15 gebremst oder freigegeben werden kann. Über das Pumpenrad 16 wird im Falle der Nutzung des hydrodynamischen Wandlers Leistung auf ein Turbinenrad 17 übertragen, welches diese in den Ausgangsbereich 4 leitet, außerdem weist der hydrodynamische Wandler 3 ein gegenüber dem Gehäuse 5 feststehendes Leitrad 18 mit entsprechenden Leitschaufeln 19 auf. Im Ausgangsbereich 4 des Getriebes 1 sind ebenfalls zwei Planetensätze 20, 21, erkennbar, welche zusammen mit zwei Lamellenkupplungen 22, 23 für den Vorwärts- und den Rückwärtsgang und das Bremsen genutzt werden.

Dieser Aufbau des Getriebes 1 entspricht dabei dem Stand der Technik. Der Aufbau des Eingangsbereichs 2 und des Ausgangsbereichs 4 ist dabei rein exemplarisch gewählt. Es ist auch denkbar, den Eingangsbereich 2 und den Ausgangsbereich 4 anders aufzubauen. Ebenso ist es denkbar, diese anders anzuordnen, so dass zum Beispiel der Wandler oder ein alternatives oder zusätzliches hydrodynamisches Bauteil, beispielsweise eine hydrodynamische Kupplung oder ein Retarder, nicht zwingend zwischen dem Ausgangsbereich 2 und dem Eingangsbereich 4 angeordnet ist. Er/Es könnte auch auf einer Seite der weiteren im Getriebe angeordneten Bauteile platziert sein. Außerdem sind, wie bereits erwähnt, alternative Aufbauten des Eingangsbereichs 2 und des Ausgangsbereichs 4 denkbar, hierzu soll beispielhaft auf einen Ausgangsbereich und/oder einen Eingangsbereich mit lediglich einem Planetensatz verwiesen werden, wie er beispielsweise aus der DE 10 2008 010 064 oder der DE 10 2008 027 947 bekannt ist.

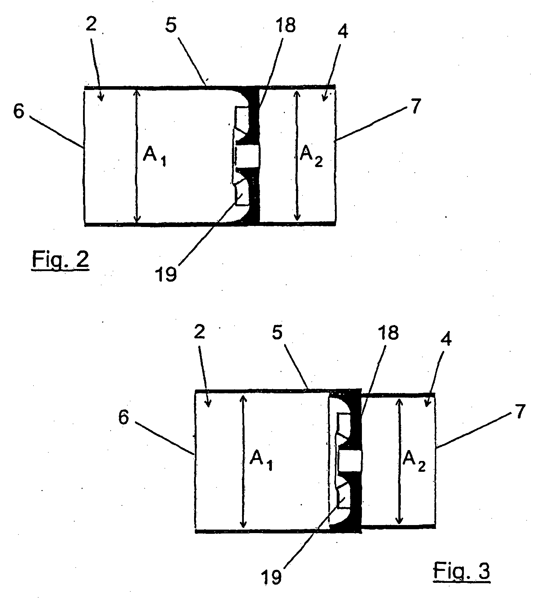

Figur 2 zeigt nun ein Getriebegehäuse 5 für ein Getriebe 1 gemäß der vorliegenden Erfindung. Der Aufbau des Getriebes sowie die Größe des Getriebes, die Anzahl der Lamellen- beziehungsweise Klauenkupplungen und die Anzahl der Planetensätze ist dabei von untergeordneter Bedeutung, da hier die Ausgestaltung des Getriebegehäuses 5 im Vordergrund stehen soll. Das Getriebegehäuse 5 weist ein einstückig mit dem Getriebegehäuse 5 ausgebildetes Teil als Funktionselement des hydrodynamischen Wandlers 3 auf. Dieses Bauteil ist in dem hier beispielhaft dargestellten Fall das Leitrad 18 mit den Leitschaufeln 19. Das Leitrad 18 samt seiner einstückigen mit ihm ausgeführten Leitschaufeln 19 ist also wiederum einstückig mit dem Gehäuse 5 des Getriebes ausgeführt. Der innere Querschnitt A₁, welcher zwischen dem Leitrad 18 und der Öffnung 6 des Getriebegehäuses 5 liegt, ist dabei so ausgebildet, dass er sich ausgehend von dem Leitrad 18 über die Strecke zwischen Leitrad 18 und Öffnung 6 gleichbleibend und im Bereich der Anbindung des Leitrads 18 an das Getriebegehäuse 5 vom Leitrad 18 aus gesehen sich erweiternd ausgebildet ist. Der innere Querschnitt A₂ zwischen dem Leitrad 18 und der Öffnung 7 des Gehäuses 5 ist mit gleichbleibendem Querschnitt ausgebildet. Es treten also weder im Querschnitt A₁ des Eingangsbereichs 2 noch im Querschnitt A₂ des Ausgangbereichs 4 Hinterschneidungen auf.

Diese Ausgestaltung des Getriebegehäuses 5 mit dem integrierten Leitrad 18 erlaubt somit die Herstellung des Getriebegehäuses 5 über ein Gussverfahren in einer Dauerform, beispielsweise einer Kokille. Die Kokille kann mindestens zweigeteilt ausgeführt sein, wobei ein erstes Teil in den Bereich des inneren Querschnitts A₁ ragt, während der andere Teil in den Bereich des inneren Querschnitts A₂ ragt. Dadurch, dass die Querschnitte sich von dem eingegossenen Leitrad 18 in Richtung der Öffnungen 6 beziehungsweise 7 nicht verringern, dass also keine Hinterschneidungen auftreten, kann ein sehr einfaches Entformen aus der Kokille dadurch erfolgen, dass die beiden Hälften der hier nicht dargestellten Kokille voneinander weg bewegt werden. Anders als bei den Ausgestaltungen gemäß dem Stand der Technik sind hier keine zusätzlichen Kerne von Nöten, welche typischerweise als Sandkerne realisiert werden müssten.

Die erfindungsgemäße Ausgestaltung der inneren Querschnitte A₁, A₂ des Getriebegehäuses 5 und die damit erreichte einfache Entformbarkeit erlaubt nun die Herstellung des Getriebegehäuses 5 in einer Kokille oder, wenn die entsprechenden Stückzahlen dies rechtfertigen, in einer Druckgussform. Beim typischerweise eingesetzten Material, beispielsweise einer Leichtmetalllegierung, insbesondere auf der Basis von Aluminium oder Magnesium, kann mit entsprechenden Formen aus Stahl oder stählernen Kokillen gearbeitet werden. Diese bieten neben dem Kostenvorteil gegenüber dem Sandguss den Vorteil, dass die Oberflächen der Gussteile eine vergleichsweise hohe Qualität aufweisen, so dass auf aufwendige Nachbearbeitung und dergleichen insbesondere im Bereich der Leitschaufeln 19 verzichtet werden kann. Außerdem wird durch die schnelle Wärmeabfuhr über die gut wärmeleitende Kokille eine vergleichsweise schnelle Abkühlung der Schmelze im Bereich der Oberfläche erreicht, so dass ein entsprechend feines Gefüge entsteht, welches eine vergleichsweise hohe Festigkeit aufweist.

Außerdem kann zusammen mit dem Getriebegehäuse bereits ein Teil des hydraulischen Bauteils, hier beispielsweise des Wandlers 3, mit realisiert werden. Dies muss also nicht als eigenständiges Bauteil hergestellt werden, so dass sich beispielsweise eine Gussform für dieses Bauteil erübrigt. Außerdem muss das Bauteil nicht in dem Getriebegehäuse 5 montiert werden, so dass weder entsprechende Aufnahmen wie Verschraubungen oder dergleichen realisiert werden müssen, noch dass der entsprechende Montageaufwand bei der Herstellung des Getriebes 5 anfällt.

Außerdem können zusätzliche Verbindungen zwischen dem Leitrad 18 und dem Gehäuse 5 entfallen, was wiederum die Anzahl der insgesamt verbauten Teile und damit die Kosten senkt. Ebenso können Übergabestellen von Schmieröl für die Lagerung in das Leitrad 18 und damit in das Getriebegehäuse 5 integriert werden. Da im Getriebegehäuse 5 ohnehin Schmieröl- und Steuerölleitungen verlaufen, können diese direkt mit den im Leitrad 18 verlaufenden Leitungen kombiniert werden, so dass keine Übergabestellen notwendig sind, welche durch entsprechende Bauteile miteinander verbunden und gegenüber der Umgebung abgedichtet werden müssen.

Außerdem ermöglicht die Gestaltung und Darstellung insbesondere der Leitradschaufeln 19 des Leitrads 18 durch den Guss in der Kokille und das entfallende Nachbearbeiten eine hohe konstruktive Freiheit. Die Leitschaufeln können den hydrodynamischen Anforderungen ideal angepasst werden, da diese in ihrer Gestaltung nicht mehr so ausgeführt werden müssen, dass eine spanende Nachbearbeitung aller relevanten Stellen ermöglicht wird.

In Figur 3 ist ein weiteres alternatives Ausführungsbeispiel dargestellt, bei dem zu erkennen ist, dass die Ausgestaltung trotz der erfindungsgemäßen Vorgaben hinsichtlich der Querschnitte A₁, A₂ durchaus gewisse Freiheiten zeigt, da hier beispielsweise ein zusätzlicher Absatz im Bereich der Anbindung des Leitrads 18 gegeben ist, sowie eine Verringerung des Außendurchmessers des Getriebegehäuses 5 im Bereich des Ausgangsbereichs 4. Diese Ausgestaltungen schränken die Entformbarkeit nicht ein, sind jedoch hinsichtlich der gestalterischen Freiheit beim Aufbau des Getriebes gegebenenfalls sehr hilfreich, da beispielsweise an entsprechenden Kanten eine Abdichtung sehr leicht erfolgen kann.

Das Leitrad 18 in der beispielhaften Darstellung der Figuren 2 und 3 zeigt dabei einen Aufbau, welcher von dem in Figur 1 abweicht. Um eine entsprechende Entformbarkeit im Bereich des Eingangsbereichs 2 realisieren zu können, ragt die gehäuseseitige Wandlerkontur auf seiner den Leitschaufeln 19 gegenüberliegenden Seiten nicht nochmals in den Innenbereich des Eingangsbereichs 2 hinein, anders als dies beim Aufbau gemäß dem Stand der Technik in Figur 1 zu erkennen ist. Dies ist ein Zugeständnis an die Entformbarkeit des Gehäuses 5 beim Gießvorgang, stellt jedoch hydrodynamisch gesehen keinen Nachteil dar. Vielmehr ist es möglich, das Pumpenrad 16 bis in den Bereich des Außendurchmessers des Eingangsbereichs am Übergang zu dem Leitrad 18 auszubilden, so dass hier das drehende Pumpenrad 16 die Ergänzung des hydrodynamischen Wandlers 3 bildet. Aufgrund der hohen Gestaltungsfreiheit der Leitschaufeln 19 kann ein solcher Aufbau entsprechend optimiert werden. Alternativ dazu könnte jedoch auch ein feststehender Ring in diesem Bereich montiert werden.

Zusätzlich zu den bereits angesprochenen Bauelementen zur Führung von Schmieröl und Hydrauliköl können weitere Elemente einstückig in das Gehäuse 5 und/oder das Leitrad 18 integriert werden. Insbesondere wäre es denkbar, Aktuatoren, beispielsweise Kolben, zur Betätigung der Lamellenbremsen, insbesondere im Ausgangsbereich 4 auf der der Öffnung 7 zugewandten Seite des Leitrads 18 in dieses, also i dessen Rückseite, zu integrieren. Diese Aktuatoren, welche dann zu Betätigung der Lamellenbremsen 22 dienen könnte, könnten durch das Getriebegehäuse 5 und das einstückig mit diesem ausgebildete Leitrad 18 mit den entsprechenden Steuerdrücken versorgt werden, so dass auch hier Bauteile und hinsichtlich Leckagen kritische Übergangsstellen eingespart werden könnten.

Der entsprechende Aufbau des Getriebegehäuses 5 mit seiner Entformbarkeit und der Möglichkeit, weitere Elemente wie Leitungselemente und/oder Aktuatoren einstückig mit dem Gehäuse beziehungsweise dem Leitrad 18 zu integrieren, ermöglicht also einen sehr effizienten und kostengünstigen Aufbau. In das Getriebegehäuse 5 müssen jetzt lediglich die Teile montiert werden, welche entweder drehbar gelagert werden müssen oder zu Wartungszwecken gegebenenfalls ausgebaut werden müssen. Die feststehenden Funktionselemente sind bereits fest in das Getriebegehäuse 5 integriert, so dass Getriebegehäuse 5 , Leitrad 18 und Leitschaufel 19 mit einer einzigen Gussform beispielsweise durch Kokillenguss oder Druckguss effizient und einfach hergestellt werden können.

Selbstverständlich muss neben der Entformbarkeit der inneren Querschnitte A₁, A₂ auch auf eine Entformbarkeit der äußeren Durchmesser des Getriebegehäuses 5 geachtet werden, da dies jedoch beim Stand der Technik ohnehin bekannt und üblich ist, wird hier auf eine detaillierte Darstellung der Konstruktionsweise verzichtet.

Anstelle der gewählten Darstellung des Leitrads 18 mit den Leitschaufeln 19 des hydrodynamischen Bauteils wäre selbstverständlich auch ein anderes gegenüber dem Gehäuse 5 feststehendes Funktionselement denkbar. Es könnte lediglich das Leitrad 18 mit dem Getriebe ausgebildet sein, während die Leitschaufeln 19 nachträglich eingesetzt werden.

Sofern das Getriebe 1 ein weiteres hydrodynamisches Bauteil aufweist, beispielsweise einen zweiten Wandler, eine hydrodynamische Kupplung oder einen Retarder, so könnte dieser insbesondere zusammen mit dem Funktionselement des ersten hydrodynamischen Bauteils in das Getriebegehäuse 5 mit integriert sein. Dann wäre es sinnvoll, beispielsweise die beiden Leiträder der beiden hydrodynamischen Bauteile, in einer Anordnung Rückseite an Rückseite auszuführen und in das Getriebegehäuse 5 zu integrieren. In der Darstellung der Figuren 2 und 3 würde dies dann so aussehen, dass auf der der Öffnung 7 zugewandten Seite des Leitrads 18 ebenfalls eine entsprechende Ausformung der benötigten Leitradgeometrie, beispielsweise samt weiteren Leitschaufeln, vorgesehen werden könnte. Auch hier wäre durch die direkte einstückige Ausbildung der beiden Leiträder miteinander ein Aufbau möglich, bei dem zwischen den Leiträdern keine Hinterschneidungen auftreten, so dass auch dieser Aufbau die Anforderungen der Erfindung erfüllt und einfach und effizient in einer Dauerform ohne zusätzliche Kerne gegossen werden könnte.

## Patentansprüche

1. Das Getriebe (1) mit
1.1 einem Getriebegehäuse (5);
1.2 wenigstens einem hydrodynamischen Bauteil (3);
1.3 wenigstens einem einstückig mit dem Getriebegehäuse (5) ausgebildeten Bereich des hydrodynamischen Bauteils (3);
**dadurch gekennzeichnet, dass**
1.4 das Getriebegehäuse (5) im wesentlichen rohrförmig mit jeweils einer Öffnung (6,7) an jedem Ende ausgebildet ist also nicht in einer die Achse des hydrodynamischen Bauteils schneidenden Ebene geteilt; wobei
1.5 der einstückig mit dem Getriebegehäuse (5) ausgebildete Bereich des hydrodynamischen Bauteils (3) als Funktionselement (18), das die Strömung in dem hydrodynamischen Bauteil beeinflusst, ausgebildet ist; wobei
1.6 das Funktionselement (18) zwischen den Öffnungen (6,7) angeordnet ist; und wobei
1.7 der innere Querschnitt (A₁,A₂) des Getriebegehäuses von dem Funktionselement (18) zu der jeweiligen Öffnung (6,7) gleichbleibend oder sich erweiternd ausgebildet ist.

2. Getriebe nach Anspruch 1, **dadurch gekennzeichnet, dass** das hydrodynamische Bauteil ein hydrodynamischer Wandler (3) ist.

3. Getriebe nach Anspruch 1 oder 2, **dadurch gekennzeichnet, dass** das wenigstens eine Funktionselement des hydrodynamischen Bauteils (3) ein Leitrad (18) ist.

4. Getriebe nach Anspruch 1, **dadurch gekennzeichnet, dass** das Leitrad (18) Leitschaufeln (19) einstückig mit umfasst.

5. Getriebe nach einem der Ansprüche 1 bis 4, **dadurch gekennzeichnet, dass** der einstückig mit dem Getriebegehäuse (5) ausgebildete Bereich (18) des hydrodynamischen Bauteils (3) neben dem wenigstens einen Funktionselement Leitungsbereiche, insbesondere Steuerleitungen für Hydrauliköl, aufweist.

6. Getriebe nach einem der Ansprüche 1 bis 5, **dadurch gekennzeichnet, dass** der einstückig mit dem Getriebegehäuse (5) ausgebildete Bereich (18) des hydrodynamischen Bauteils (3) neben dem wenigstens einen Funktionselement hydraulische Aktuatoren, insbesondere Kolben, aufweist.

7. Getriebe nach einem der Ansprüche 1 bis 6, **dadurch gekennzeichnet, dass** der einstückig mit dem Getriebegehäuse (5) ausgebildete Bereich (18) des hydrodynamischen Bauteils (3) zwei Funktionselemente aufweist, welche so angeordnet sind, dass ihre funktionsbehafteten Seiten der jeweiligen Öffnung (6,7) zugewandt sind.

8. Getriebe nach einem der Ansprüche 1 bis 7, **dadurch gekennzeichnet, dass** das Getriebegehäuse (5) aus einer Leichtmetalllegierung ausgebildet ist.

9. Getriebe nach Anspruch 8, **dadurch gekennzeichnet, dass** die Leichtmetalllegierung auf der Basis von Aluminium ausgebildet ist.

10. Getriebe nach Anspruch 8, **dadurch gekennzeichnet, dass** die Leichtmetalllegierung auf der Basis von Magnesium ausgebildet ist.

11. Verfahren zum Herstellen eines Getriebegehäuses für ein Getriebe nach einem der Ansprüche 1 bis 10, **dadurch gekennzeichnet, dass** das Getriebegehäuse (5) mit einer Dauerform ohne verlorene Kerne gegossen wird.

12. Verfahren nach Anspruch 11, **dadurch gekennzeichnet, dass** als Dauerform eine wenigstens zweiteilige Kokille verwendet wird, in welche die flüssige Schmelze eingegossen wird.

13. Verfahren nach Anspruch 11, **dadurch gekennzeichnet, dass** als Dauerform eine wenigstens zweiteilige Druckgussform verwendet wird, in welche die flüssige Schmelze eingepresst wird.

## Claims

1. A transmission, comprising
1.1 a transmission housing;
1.2 at least one hydrodynamic component;
1.3 at least one region of the hydrodynamic component which is integrally arranged with the transmission housing;
**characterized in that**
1.4 the transmission housing (5) is arranged in a substantially tubular way with one opening (6, 7) at each end, which means that it is not divided in a plane intersecting the axis of the hydrodynamic component, with
1.5 the region of the hydrodynamic component (3) which is integrally arranged with the transmission housing (5) is arranged as a functional element (18), which influences the flow in the hydrodynamic component, with
1.6 the functional element (18) being arranged between the openings (6, 7), and with
1.7 the inner cross section (A₁, A₂) of the transmission housing being arranged to be constant or expanding from the functional element (18) to the respective opening (6, 7).

2. A transmission according to claim 1, **characterized in that** the hydrodynamic component is a hydrodynamic converter (3).

3. A transmission according to claim 1 or 2, **characterized in that** the at least one functional element of the hydrodynamic component (3) is a guide wheel (18).

4. A transmission according to claim 1, **characterized in that** the guide wheel (18) comprises guide wheels (19) in an integral manner.

5. A transmission according to one of the claims 1 to 4, **characterized in that** the region (18) of the hydrodynamic converter (3) which is arranged integrally with the transmission housing (5) comprises line areas, especially control lines for hydraulic oil, in addition to the at least one functional element.

6. A transmission according to one of the claims 1 to 5, **characterized in that** the region (18) of the hydrodynamic converter (3) which is arranged integrally with the transmission housing (5) comprises hydraulic actuators, especially pistons, in addition to the at least one functional element.

7. A transmission according to one of the claims 1 to 6, **characterized in that** the region (18) of the hydrodynamic converter (3) which is arranged integrally with the transmission housing (5) comprises two functional elements which are arranged in such a way that their functional sides face the respective opening (6, 7).

8. A transmission according to one of the claims 1 to 7, **characterized in that** the transmission housing (5) is made of a light-metal alloy.

9. A transmission according to claim 8, **characterized in that** the light-metal alloy is arranged on the basis of aluminum.

10. A transmission according to claim 8, **characterized in that** the light-metal alloy is arranged on the basis of magnesium.

11. A method for producing a transmission housing for a transmission according to one of the claims 1 to 10, **characterized in that** the transmission housing (5) is cast with a permanent mold without any lost cores.

12. A method according to claim 11, **characterized in that** at least a bipartite gravity die is used as a permanent mold, in which the liquid melt is cast.

13. A method according to claim 11, **characterized in that** an at least bipartite die-casting die is used in which the liquid melt is pressed.

## Revendications

1. Transmission (1), possédantun carter de transmission (5);
1.1 au moins un composant hydrodynamique (3);
1.2 au moins une portion du composant hydrodynamique (3), portion constituée d'un seul tenant avec le carter de transmission (5); **caractérisée en ce que**
1.4 le carter de transmission (5) est constitué plus ou moins tubulaire avec respectivement une ouverture (6,7) à chaque extrémité et donc n'est pas divisé dans un plan couplant l'axe du composant hydrodynamique; où
1.5 la portion du composant hydrodynamique (3), portion constituée d'un seul tenant avec le carter de transmission (5), est conçue comme élément fonctionnel influençant l'écoulement dans le composant hydrodynamique; où
1.6 l'élément fonctionnel (18) est disposé entre les ouvertures (6,7); et où
1.7 la section transversale interne (A1, A2) du carter de transmission reste constante ou bien va s'élargissant depuis l'élément fonctionnel (18) jusqu'à l'ouverture respective (6,7).

2. Transmission selon la revendication 1, **caractérisée en ce que** le composant hydrodynamique est un convertisseur hydrodynamique (3).

3. Transmission selon la revendication 1 ou 2, **caractérisée en ce que** ledit au moins un élément fonctionnel du composant hydrodynamique (3) est situé dans la roue directrice (18).

4. Transmission selon la revendication 1, **caractérisée en ce que** la roue directrice (18) comprend des aubes directrices (19) d'un seul tenant.

5. Transmission selon l'une des revendications 1 à 4, **caractérisée en ce que** la portion (18) du composant hydrodynamique (3), portion conçue d'un seul tenant avec le carter de transmission (5), présente des portions de conduites, en particulier des conduites de commande pour l'huile hydraulique, en plus dudit au moins un élément fonctionnel.

6. Transmission selon l'une des revendications 1 à 5, **caractérisée en ce que** la portion (18) du composant hydrodynamique (3), portion conçue d'un seul tenant avec le carter de transmission (5), présente des actionneurs hydrauliques, en particulier des pistons, en plus dudit au moins un élément fonctionnel.

7. Transmission selon l'une des revendications 1 à 6, **caractérisée en ce que** la portion (18) du composant hydrodynamique (3), portion conçue d'un seul tenant avec le carter de transmission (5), présente deux éléments fonctionnels qui sont disposés de telle sorte que leurs côtés fonctionnels se trouvent en face de l'ouverture respective (6,7).

8. Transmission selon l'une des revendications 1 à 7, **caractérisée en ce que** le carter de transmission (5) est consistué d'un alliage de métaux légers.

9. Transmission selon la revendication 8, **caractérisée en ce que** l'alliage de métaux légers est à base d'aluminium.

10. Transmission selon la revendication 8, **caractérisée en ce que** l'alliage de métaux légers est à base de magnésium.

11. Procédé de fabrication d'un carter de transmission pour transmission selon l'une des revendications 1 à 10, **caractérisé en ce que** l'on coule le carter de transmission (5) avec un moule permanent sans noyaux perdus.

12. Procédé selon la revendication 11, **caractérisé en ce que** l'on utilise comme moule permanent une lingotière composée au moins de deux parties, dans laquelle on coule la masse fondue liquide

13. Procédé selon la revendication 11, **caractérisé en ce que** l'on utilise comme moule permanent un moule de coulage sous pression composé au moins de deux parties, à l'intérieur duquel on coule la masse fondue liquide.
